# EUROPÄISCHE PATENTSCHRIFT

(11) **EP 3 593 228 B1**
(45) Veröffentlichungstag und Bekanntmachung des Hinweises auf die Patenterteilung: **05.05.2021**
(21) Anmeldenummer: 18712119.9
(22) Anmeldetag: 09.03.2018
(51) Int. Cl.: B60K 35/00, G06F 3/041, H02K 33/18, G06F 3/01, H02K 1/00, H02K 1/06, H02K 1/12, H02K 33/00, H02K 33/12

(54) **ELEKTROMAGNETISCHER AKTUATOR FÜR EINE MECHANISCHE RÜCKMELDEEINHEIT**
ELECTROMAGNETIC ACTUATOR OF A HAPTIC FEEDBACK DEVICE
ACTIONNEUR ÉLECTROMAGNÉTIQUE D'UN DISPOSITIF DE RETOUR TACTILE

(30) Priorität: 09.03.2017 DE 102017105045
(43) Veröffentlichungstag der Anmeldung: 15.01.2020
(73) Patentinhaber: Behr-Hella Thermocontrol GmbH, 70469 Stuttgart (DE)
(72) Erfinder: FUST, Winfried, 59556 Lippstadt (DE)
(74) Vertreter: dompatent von Kreisler Selting Werner - Partnerschaft von Patent- und Rechtsanwälten mbB
(86) Internationale Anmeldenummer: PCT/EP2018/055885
(87) Internationale Veröffentlichungsnummer: WO 2018/162704

(56) Entgegenhaltungen:
- FR-A1- 2 927 709
- US-A1- 2011 037 546
- US-A1- 2014 009 005
- US-A1- 2014 176 462

## Beschreibung

Die Erfindung betrifft einen elektromagnetischen Aktuator als Stellglied einer mechanischen Rückmeldeeinheit einer Bedienvorrichtung für eine Fahrzeugkomponente. Ferner betrifft die Erfindung eine Bedienvorrichtung für eine Fahrzeugkomponente mit einem derartigen elektromagnetischen Aktuator als Stellglied einer mechanischen Rückmeldeeinheit der Bedienvorrichtung.

Moderne Bedienkonzepte insbesondere für Fahrzeugkomponenten-Bedienvorrichtungen weisen ein Bedienelement mit einer Bedienoberfläche auf, die als Touch-Screen ausgeführt ist und auf der Bedienfelder angezeigt sind. Durch Berührung eines Bedienfeldes wird ein Befehl eingegeben, wobei der Person eine gültige Bedieneingabe taktil rückgemeldet und bestätigt wird. Die taktile Rückmeldung erfolgt durch eine kurzzeitige mechanische Anregung des Bedienelements, wozu unter anderem elektromagnetische Aktuatoren eingesetzt werden.

Ein derartiger elektromagnetischer Aktuator sollte über ein möglichst exakt geführtes Stellglied verfügen.

Ein elektromagnetischer Aktuator weist im Allgemeinen einen Stator und einen relativ zum Stator längs einer Bewegungsachse translatorisch bewegbaren Translator auf. Dabei ist der Translator zwischen Teilen des Stators angeordnet, relativ zu denen er bei seiner translatorischen Bewegung einen konstanten Abstand beibehalten sollte. Zu diesem Zweck weist ein elektromagnetischer Aktuator im Regelfall eine Führungsanordnung zur translatorischen Führung des Translators bei dessen Bewegung auf.

Die Führungsanordnung übernimmt dabei mitunter auch die Funktion der Rückstellung des Translators in seine Ruhestellung. Ein derartiger elektromagnetischer Aktuator in Form eines Tauchspulenaktuators ist in DE-A-10 2015 220 494 beschrieben. Die dort verwendete mechanische Führung mittels Blattfedern garantiert jedoch bei größeren translatorischen Bewegungen keine konstante Abstandseinhaltung des Translators zum Stator.

Aus JP-A-2017-018958 ist ein Vibrationsaktuator bekannt, bei dem innerhalb eines Rahmens ein Gewicht elektromagnetisch angetrieben vor- und zurückbewegbar ist. Dazu ist das Gewicht an seinen in der Oszillationsachse liegenden Enden mittels Blattfedern federelastisch gelagert.

Aus EP-A-3 070 578 und EP-A-1 939 061 sind Vibrationsaktuatoren für Bedieneinheiten beschrieben.

Aus US-A-2014/009005 ist ein Haptik-Aktuator für Bedienvorrichtungen bekannt, die mittels eines Aktuators mit haptischen Feedback-Eigenschaften ausgestattet werden können. Der Haptik-Aktuator weist zwei magnetische Elemente, die voneinander durch mindestens einen Luftspalt getrennt sind, und einen Feldgenerator auf. Das zweite magnetische Element ist zumindest teilweise innerhalb des Feldgenerators angeordnet, während das erste magnetische Element außerhalb des Feldgenerators positioniert ist. Mittels eines federnden Verbinders sind die beiden magnetischen Elemente derart verbunden, dass bei einer selektiven Aktivierung und Deaktivierung des Feldgenerators ein selektives Schließen und Öffnen des Luftspalts zwischen den beiden magnetischen Elementen möglich ist.

Aufgabe der Erfindung ist es, einen elektromagnetischen Aktuator mit verbesserter Führung als Stellglied einer mechanischen Rückmeldeeinheit einer Bedienvorrichtung für eine Fahrzeugkomponente anzugeben.

Zur Lösung dieser Aufgabe sieht die Erfindung einen elektromagnetischen Aktuator vor, der versehen ist mit den Merkmalen des Anspruchs 1. Einzelne Ausgestaltungen der Erfindung sind Gegenstand der Unteransprüche.

Der erfindungsgemäße elektromagnetische Aktuator weist einen Stator und einen längs einer Bewegungsachse translatorisch bewegbaren Translator auf. Der Translator kann dabei längs der Bewegungsachse linear oder aber auch längs einer gekrümmten Linie bewegt werden. Entscheidend ist, dass der Translator translatorisch bewegbar ist. Bei seiner Bewegung bleibt der Abstand des Translators zum Stator gleich. Der Translator lässt sich zwischen einer Ruhestellung und mindestens einer Endstellung vor- und zurückbewegen. Vorzugsweise lässt sich der Translator aus seiner Ruhestellung heraus in zwei entgegengesetzten Richtungen jeweils in eine Endstellung bewegen, aus denen er dann wieder in die Ruhestellung zurückbewegt wird.

Für die translatorische Führung des Translators bei dessen Bewegung ist erfindungsgemäß eine Führungsanordnung vorgesehen, die mindestens eine sich quer zur Bewegungsachse erstreckende Blattfeder aufweist. Die Blattfeder weist einen mittleren Anbringungsabschnitt und beidseitig des Anbringungsabschnitts jeweils einen Fixierabschnitt auf, wobei die beiden Fixierabschnitte vorzugweise an den entgegensetzten Enden der Blattfeder vorgesehen sind. Erfindungsgemäß sind nun die beiden Fixierabschnitte mechanisch mit dem Stator und der Anbringungsabschnitt mechanisch mit dem Translator gekoppelt. Alternativ sind erfindungsgemäß die beiden Fixierabschnitte der Blattfeder mechanisch mit dem Translator und der Anbringungsabschnitt mit der Blattfeder mechanisch mit dem Stator gekoppelt.

Durch diese Anordnung der Blattfeder, deren beiden Enden entweder mit dem Stator oder mit dem Translator verbunden sind, ergibt sich eine exakte Parallelführung des Translators relativ zum Stator. Diese Führung kann dadurch verbessert werden, dass die Führungsanordnung zwei quer zur Bewegungsachse des Translators verlaufende Blattfedern mit jeweils einem mittleren Anbringungsabschnitt und zwei beidseitig des Anbringungsabschnitts angeordneten Fixierabschnitten aufweist und dass die beiden Blattfedern - in Verlaufsrichtung der Bewegungsachse des Translators betrachtet - auf Abstand zueinander und insbesondere an einander abgewandten Enden entweder des Translators oder des Stators angeordnet sind. Durch die Anordnung des Translators und des Stators zwischen bzw. an den beiden Blattfedern ist eine exakte Parallelführung des Translators bzw. des Stators gewährleistet, ohne dass dieser während seiner Bewegung Drehmomenten ausgesetzt ist (insbesondere bei zur Bewegungsachse symmetrischer Ausbildung des Translators und/oder Stators und der Blattfeder bzw. Blattfedern). Damit kann auf zusätzliche mechanische Führungselemente verzichtet werden. Der Translator ist mechanisch ausschließlich an den beiden Blattfedern fixiert, die dafür sorgen, dass sich der Abstand zum Stator bei Bewegung des Translators nicht verändert und der Translator keinerlei Drehmomenten ausgesetzt ist. Der Vorteil der Verwendung der mindestens einen Blattfeder in deren erfindungsgemäßer Ausrichtung quer zur Bewegungsachse des Translators sowie quer zur Ausrichtung des Luftabstands zwischen Translator und Stator, d. h. quer zum Luftspalt zwischen Translator und Stator selbst ist darin zu sehen, dass dadurch die Führung des Translators quer zum Luftspalt zwischen Translator und Stator ideal steif ist, um einen Kontakt zum Stator und damit Reibung und Geräusche zu vermeiden. In Bewegungsrichtung des Translators ist dieser weich an den Stator angekoppelt. Durch die erfindungsgemäße Führungsanordnung mit der mindestens einen erfindungsgemäß angeordneten Blattfeder, die so positioniert ist, dass die von ihr aufgespannte Ebene quer zum Luftspalt gerichtet ist, ist es möglich, elektromagnetische Aktuatoren bereitzustellen, deren Luftspalte, also deren Abstände zwischen Translator und Stator minimal sind, so dass geringe kleinvolumige Bauformen realisierbar sind.

In weiterer zweckmäßiger Ausgestaltung der Erfindung kann vorgesehen sein, dass der Anbringungsabschnitt der mindestens einen Blattfeder eine von dem Anbringungsabschnitt abstehende Anbringungslasche aufweist, mittels derer die Blattfeder an dem Translator - oder alternativ an dem Stator - angebracht ist, und dass jeder der Fixierabschnitte der mindestens einen Blattfeder mit einer abstehenden Fixierlasche versehen ist, mittels derer die Blattfeder an dem Stator - oder alternativ an dem Translator - befestigt ist.

Der erfindungsgemäße elektromagnetische Aktuator lässt sich vorzugsweise als sogenannter Tauchspulenaktuator realisieren, bei dem der Translator als plattenartiges Translatorelement (Translatorplattenelement) ausgebildet ist, das zwischen zwei plattenartigen Statorelementen (Statorplattenelementen) des Stators angeordnet ist. Durch mechanische Abstandshalter werden die beiden Statorplattenelemente auf Abstand zueinander gehalten. Im Zwischenraum zwischen den beiden Statorplattenelementen befindet sich das Translatorplattenelement, das mittels mindestens einer Blattfeder, vorzugweise mittels zweier Blattfedern an einem bzw. an jeweils einem der Statorplattenelemente angekoppelt ist. Bei zwei Blattfedern können also beide zwischen dem Translator und einem der Statorplattenelemente angeordnet sein; alternativ kann die eine Blattfeder zwischen dem Translatorplattenelement und dem einen Statorplattenelement und die andere Blattfeder zwischen dem Translatorplattenelement und dem anderen Statorplattenelement angeordnet sein. Da die erfindungsgemäße Führung des Translators unter reiner Parallelverschiebung des Translatorplattenelements relativ zu den Statorplattenelementen und ohne Einwirkung von Drehmomenten auf das Translatorplattenelement erfolgt, kann der zuvor beschriebene Aufbau des elektromagnetischen Aktuators bei minimalen Luftspalten zwischen dem Translatorplattenelement und den beiden Statorplattenelementen realisiert werden.

In weiterer zweckmäßiger Ausgestaltung der Erfindung kann vorgesehen sein, dass entweder der Stator mindestens einen Permanentmagnet und/oder mindestens eine Statorspule sowie der Translator mindestens eine mit dem Permanentmagnet des Stators und/oder mit der Statorspule zwecks Linearbewegung des Translators zusammenwirkende Translatorspule oder der Translator mindestens einen Permanentmagnet und/oder mindestens eine Translatorspule sowie der Stator mindestens eine mit dem Permanentmagnet des Translators und/oder mit der Translatorspule zwecks Linearbewegung des Translators zusammenwirkende Statorspule aufweist und dass eine Ansteuereinheit zur Ansteuerung der mindestens einen Statorspule und/oder der mindestens einen Translatorspule vorgesehen ist.

Die zuvor genannte Aufgabe wird erfindungsgemäß auch mit Hilfe einer Bedienvorrichtung für eine Fahrzeugkomponente realisiert, wobei diese Bedienvorrichtung versehen ist
- mit einem Gehäuse,
- einem in und/oder an dem Gehäuse angeordneten, manuell betätigbaren Bedienelement, das eine Bedienoberfläche aufweist,
- wobei das Bedienelement lateral bewegbar ist und/oder längs einer eine Lateralkomponente aufweisenden Bewegungsachse bewegbar ist, und
- einem elektromagnetischen Aktuator gemäß einer der zuvor beschriebenen Varianten, der zur taktilen Bestätigung einer manuellen Betätigung der Bedienoberfläche des Bedienelements aktivierbar ist,
- wobei der Stator des Aktuators mechanisch mit dem Gehäuse sowie der Translator des Aktuators mechanisch mit dem Bedienelement oder der Stator des Aktuators mechanisch mit dem Bedienelement sowie der Translator des Aktuators mechanisch mit dem Gehäuse gekoppelt ist.

Die Erfindung wird nachfolgend unter Bezugnahme auf die Zeichnung näher erläutert. Im Einzelnen zeigen dabei:
- Fig. 1: eine perspektivische Ansicht auf ein Ausführungsbeispiel eines erfindungsgemäßen elektromagnetischen Aktuators mit zwei quer zur Bewegungsachse des Translators verlaufenden Blattfedern,
- Fig. 2: eine Seitenansicht auf den elektromagnetischen Aktuator gemäß Fig. 1,
- Fig. 3: eine Draufsicht auf den elektromagnetischen Aktuator gemäß Fig. 1,
- Fign. 4 und 5: Draufsichten auf den elektromagnetischen Aktuator nach dessen Aktivierung zur Bewegung des Translators aus dessen Ruhestellung in jeweils eine von zwei möglichen Endstellungen,
- Fig. 6: eine perspektivische Ansicht auf ein alternatives Ausführungsbeispiel eines erfindungsgemäßen elektromagnetischen Aktuators mit zwei quer zur Bewegungsachse des Translators verlaufenden Blattfedern und
- Fig. 7: schematisch den Aufbau einer Bedienvorrichtung für eine Fahrzeugkomponente, wobei ein Bedienelement der Bedienvorrichtung zwecks taktiler Rückmeldung und damit zwecks Bestätigung einer Bedienereingabe mit Hilfe des elektromagnetischen Aktuators nach den Fign. 1 bis 5 mechanisch angeregt wird.

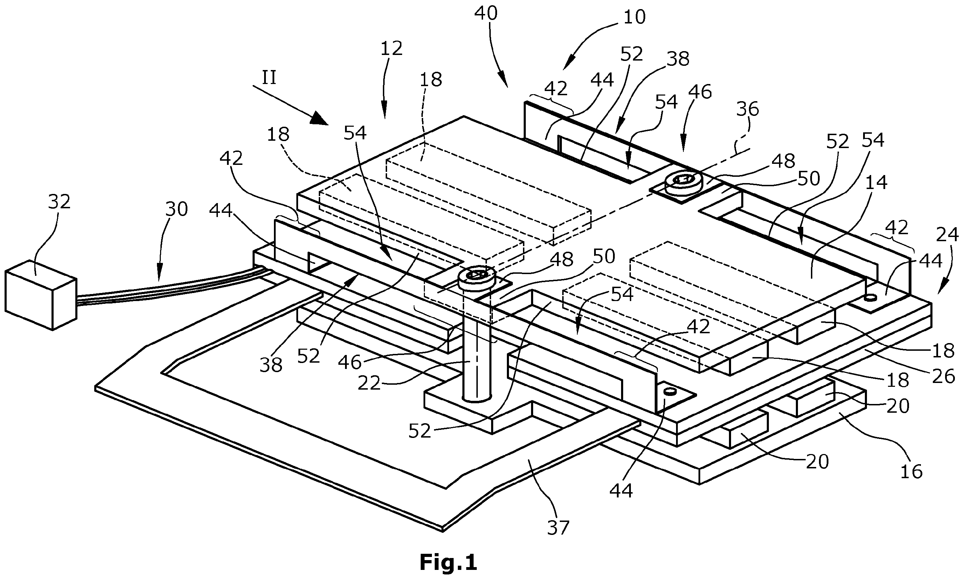

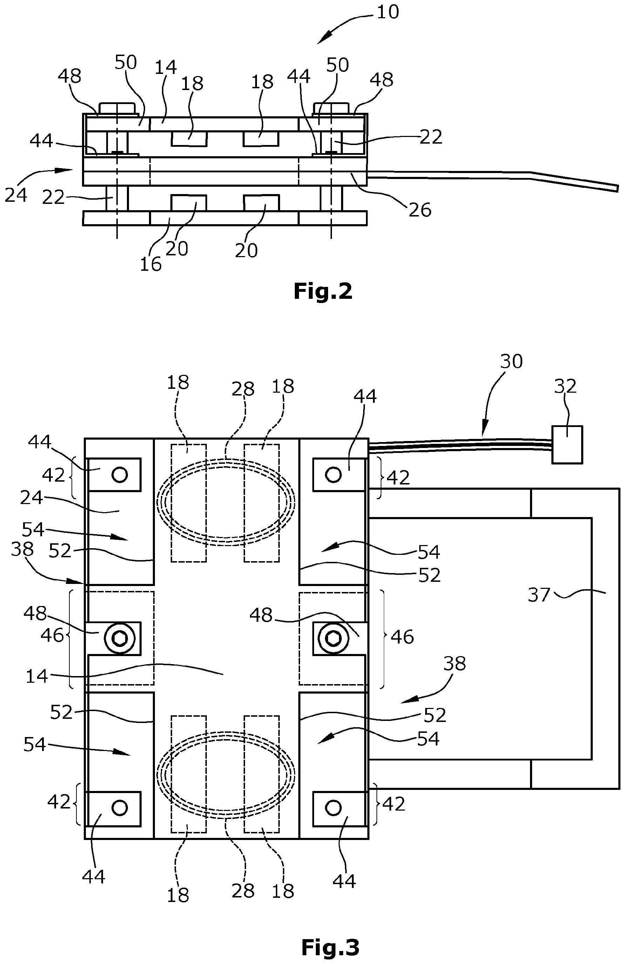

Fig. 1 zeigt perspektivisch einen elektromagnetischen Aktuator 10 gemäß einem Ausführungsbeispiel der Erfindung, wobei die Fign. 2 und 3 Ansichten des elektromagnetischen Aktuators von der Seite bzw. von oben zeigen. Der Aktuator 10 weist einen Stator 12 auf, der in diesem Ausführungsbeispiel zwei auf Abstand gehaltene, übereinander angeordnete Statorplattenelemente 14,16 aufweist. Diese Statorplattenelemente 14,16 sind mit Permanentmagneten 18 bzw. 20 versehen. Zwei bolzenförmige Abstandshalter 22 verbinden die beiden Statorplattenelemente 14,16 miteinander.

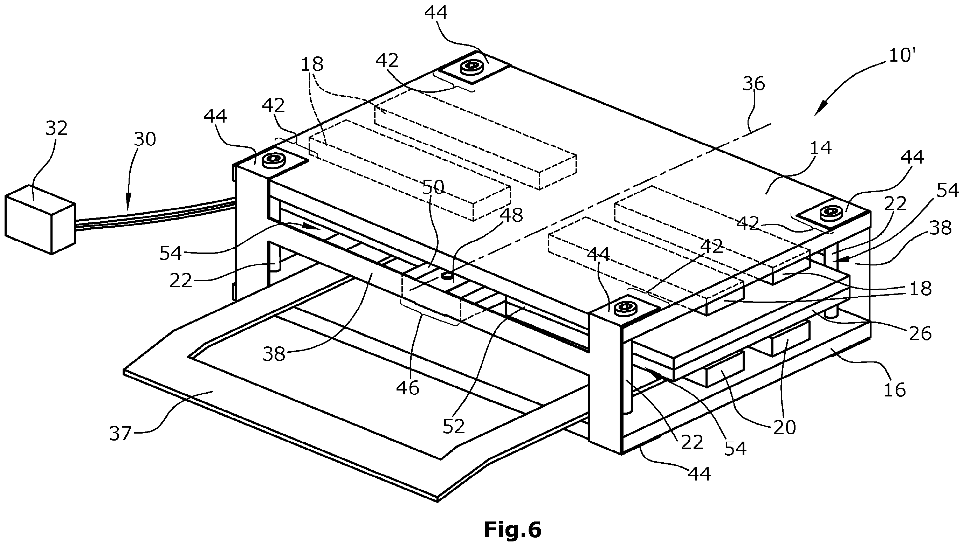

Zwischen den beiden Statorplattenelementen 14,16 ist ein Translator 24 angeordnet, der in diesem Ausführungsbeispiel als Translatorplattenelement 26 ausgeführt ist. Das Translatorplattenelement 26 ist mit mindestens einer elektrischen Spule 28 versehen. Zum Translator 24 führt eine elektrische Leitung 30, die beispielsweise mittels eines bei 32 angedeuteten Steckers mit einer Ansteuereinheit 34 elektrisch verbindbar ist. Durch Ansteuerung der Spule 28 bewegt sich der Translator 24, und zwar je nach Richtung des Stroms in eine von zwei entgegengesetzte Richtungen. Die Bewegungsachse, längs derer sich der Translator 24 bewegt, ist in Fig. 1 bei 36 angedeutet (siehe beispielsweise Fig. 6).

Mit dem Translator 24 ist ein Kopplungselement 37 verbunden, das die mechanische Verbindung des Translators 24 mit einem vom Translator 24 zu bewegenden Objekt, beispielsweise einem federelastisch gelagerten Bedienelement einer Fahrzeug-Bedienvorrichtung realisiert (siehe beispielsweise Fig. 6).

Erfindungsgemäß ist der Translator 24 mit einem der beiden Statorplattenelemente 14 bzw. 16 gekoppelt, und zwar in Richtung der Erstreckung der Bewegungsachse 36 weich und quer dazu steif. Durch die steife Kopplung wird erreicht, dass sich der Translator 24 bei einer Bewegung längs der Bewegungsachse 36 nicht in Richtung auf den Stator 12 zu bewegen kann. Damit bleibt der Luftspalt oberhalb und unterhalb des Translators 24 zu den Statorplattenelementen 14,16 unverändert, wenn sich der Translator 24 bewegt. Auch ändert sich durch diese steife Kopplung nicht der Aktorspalt bei einer Belastung quer zur Bewegungsachse 36.

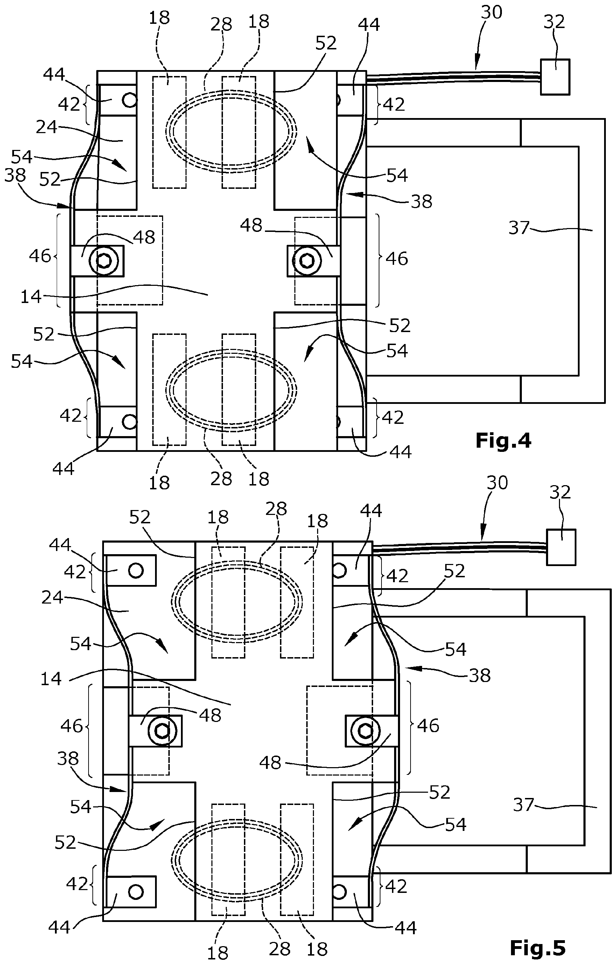

Diese spezielle mechanische Kopplung des Translators 24 mit in diesem Ausführungsbeispiel dem oberen Statorplattenelement 14 wird durch zwei Blattfedern 38 erreicht, die eine Führungsanordnung 40 zur translatorischen Führung des Translators 24 unter Beibehaltung der Luftspalte zu den Statorplattenelementen 14,16 gewährleistet. Jede Blattfeder 38 weist an ihren beiden Enden jeweils einen Fixierabschnitt 42 auf, von denen jeder mit einer abgewinkelten Fixierlasche 44 versehen ist, die jeweils seitlich von dem betreffenden Ende der Blattfeder 38 absteht. Zwischen den beiden Fixierabschnitten 42 jeder Blattfeder 38 befindet sich ein Anbringungsabschnitt 46, der mittenzentriert zwischen den Enden der betreffenden Blattfeder 38 angeordnet ist. Von den Anbringungsabschnitten 46 ragen jeweils Anbringungslaschen 48 ab. In diesem Ausführungsbeispiel sind die Anbringungslaschen 48 an dem oberen Statorplattenelement 14 befestigt, während die Fixierlaschen 44 an dem Translator 24 befestigt sind. Das obere Statorplattenelement 14 weist im Bereich der Anbringungsabschnitte 46 der Blattfedern 38 einander entgegengesetzt gerichtete, abstehende Anbringungsvorsprünge 50 auf, an denen die Anbringungslaschen 48 befestigt sind. Aufgrund dieser Anbringungsvorsprünge 50 bildet sich zwischen jedem der längs der Bewegungsachse 36 liegenden (vorderen und hinteren) Enden 52 des Statorplattenelements 14 ein Abstand 54 zu der jeweiligen benachbarten Blattfeder 38, so dass nun der Translator 24 längs der Bewegungsachse 36 in beiden Richtungen jeweils um einen bestimmten Wegverfahrbar ist, ohne dass die dabei von dem Translator 24 mitgenommenen Fixierabschnitte 42 der Blattfedern 38 mit dem oberen Statorplattenelement 14 kollidieren. Diese Situation ist in den Fign. 4 und 5 gezeigt.

Fig. 6 zeigt den Aufbau eines alternativ ausgestalteten Aktuators 10', wobei die dem Aktuator 10 der Fign. 1 bis 5 konstruktiv oder funktional entsprechenden Elemente mit den gleichen Bezugszeichen bezeichnet sind.

Im Unterschied zum Aktuator 10 nach den Fign. 1 bis 5 sind bei dem Aktuator 10' der Fig. 6 die Blattfedern 38 im jeweiligen Anbringungsabschnitt 46 an einem Anbringungsvorsprung 50 des Translators 24 befestigt und an den Fixierabschnitten 42 mit beiden Statorplattenelementen 14,16 verbunden. Die Blattfedern 38 dienen somit auch als Abstandshalter für die Statorplattenelemente 14,16; es können aber dennoch auch separate Abstandshalter 22 vorgesehen sein, wie dies in Fig. 6 gestrichelt gezeigt ist.

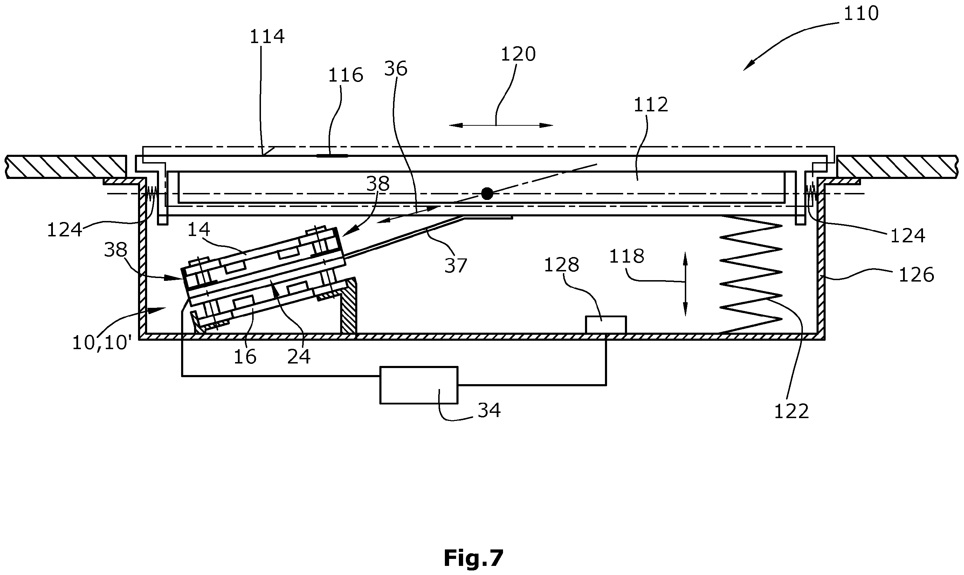

Anhand von Fig. 7 soll nachfolgend noch auf eine Möglichkeit des Einsatzes des elektromagnetischen Aktuators bei einer Bedienvorrichtung für eine Fahrzeugkomponente mit "Force-Feedback"-Funktionalität eingegangen werden.

In Fig. 7 ist in Seitenansicht und schematisch eine Bedieneinheit 110 gezeigt, die ein Bedienelement 112 aufweist. Das Bedienelement 112 ist in diesem Ausführungsbeispiel als Display-Baugruppe mit einer Bedienoberfläche 114 ausgeführt, auf der eine Vielzahl von Symbolfeldern 116 darstellbar ist. Das Bedienelement 112 ist im Regelfall hinterleuchtet.

Zur Ausführung einer Betätigungsbewegung in Vertikalbewegungsrichtung (siehe den Doppelpfeil 118) sowie zur in lateraler Richtung erfolgender Bestätigung einer derartigen Betätigungsbewegung (siehe den Doppelpfeil 120 in Fig. 7) ist das Bedienelement 112 elastisch an einem Gehäuse 126 über schematisch angedeutete erste und zweite Federn 122,124 gelagert. Mittels eines Sensors 128 lässt sich feststellen, dass sich das Bedienelement 112 längs der Vertikalbewegungsachse 118 bewegt hat. Dies wird in der Auswerte- und Ansteuereinheit 34 ermittelt, woraufhin diese den Aktuator 10 (bzw. 10') ansteuert. Der feststehende Stator 12 des Aktuators 10 (bzw. 10') stützt sich am Gehäuse 126 ab, während der Translator 24 mittels des Kupplungselements 37 mechanisch mit dem Bedienelement 112 gekoppelt ist (oder umgekehrt). Die Wirkbewegungsachse des Translators 24 ist anhand des Doppelpfeils 36 dargestellt.

Je größer und aufwendiger das Bedienelement 112 konstruiert ist, umso schwerer ist es und umso mehr Bauraum nimmt es ein. Wenn nun gefordert wird, dass das haptische Feedback über die gesamte Bedienoberfläche 114 betrachtet gleich sein soll, so sollte das Bedienelement 112 beim haptischen Feedback ausschließlich eine translatorische Bewegung vollführen. Hierzu trägt die Linearführung des Translators 24 bei.

Die rein translatorische Bewegung des Bedienelements 112 beim aktiven haptischen Feedback weist gemäß Fig. 7 also sowohl eine Lateral- als auch eine Vertikalkomponente auf. Dass diese Feedbackbewegung nicht rein lateral ist, spielt dafür, dass das haptische Empfinden über die gesamte Bedienoberfläche 114 des Bedienelements 112 gleich sein soll, keine Rolle. Entscheidend ist, dass das Bedienelement 112 beim aktiven haptischen Feedback keinerlei rotatorische Bewegungsanteile erfährt, es also insoweit vorteilhafterweise ausschließlich zu einer Parallelverschiebung des Bedienelements 112 im Raum kommt, was durch die Linearführung des Translators 24 ebenfalls unterstützt wird.

Die zuvor beschriebene Anordnung des Aktuators 10 (bzw. 10') in der Bedieneinheit 110 der Fig. 6 ist für die Erfindung nicht zwingend, bittet aber hinsichtlich des haptischen Feedback gewisse Vorteile, was ebenso in der PCT-Anmeldung PCT/EP2017/051416 beschrieben ist.

### BEZUGSZEICHENLISTE

- 10: Aktuator
- 10': Aktuator
- 12: Stator
- 14: oberes Statorplattenelement
- 16: unteres Statorplattenelement
- 18: Permanentmagnete
- 20: Permanentmagnete
- 22: Abstandshalter
- 24: Translator
- 26: Translatorplattenelement
- 28: Spule
- 30: Leitung
- 32: Stecker
- 34: Ansteuereinheit
- 36: Bewegungsachse des Translators
- 37: Kopplungselement
- 38: Blattfedern
- 40: Führungsanordnungen für die Blattfedern
- 42: Fixierabschnitt
- 44: Fixierlasche
- 46: Anbringungsabschnitt
- 48: Anbringungslaschen
- 50: Anbringungsvorsprung
- 52: in Erstreckung der Bewegungsachse liegende Enden jedes Statorplattenelements
- 54: Abstand eines Statorplattenelementendes zur benachbarten Blattfeder
- 110: Bedieneinheit
- 112: Bedienelement
- 114: Bedienoberfläche
- 116: Symbolfelder
- 118: Vertikalbewegungsachse
- 120: Doppelpfeil
- 122: Federn
- 124: Federn
- 126: Gehäuse
- 128: Sensor

## Patentansprüche

1. Elektromagnetischer Aktuator für eine mechanische Rückmeldeeinheit einer insbesondere für eine Fahrzeugkomponente vorgesehenen Bedienvorrichtung zur taktilen Rückmeldung einer Bedienung der Bedienvorrichtung, mit
- einem Stator (12),
- einem längs einer Bewegungsachse (36) zwischen einer Ruhestellung und mindestens einer Endstellung vor- und zurückbewegbaren translatorisch bewegbaren Translator (24), wobei der Abstand des Translators (24) zum Stator (12), der durch einen orthogonal zur Bewegungsachse (36) gerichteten Luftspalt definiert ist, bei Bewegung des Translators (24) längs der Bewegungsachse (36) im Wesentlichen gleich bleibt, und
- einer Führungsanordnung (40) zur translatorischen Führung des Translators (24) bei dessen Bewegung,
- wobei die Führungsanordnung (40) mindestens eine sich quer sowohl zur Bewegungsachse (36) als auch zur Ausrichtung des Luftspalt-Abstands von Stator (12) und Translator (24) erstreckende Blattfeder (38) aufweist, die einen mittleren Anbringungsabschnitt (46) und beidseitig des Anbringungsabschnitts (46) jeweils einen Fixierabschnitt (42) aufweist, und
- wobei entweder der Translator (24) mechanisch mit dem Anbringungsabschnitt (46) der Blattfeder (38) und deren Fixierabschnitte (42) mechanisch mit dem Stator (12) oder der Stator (12) mechanisch mit dem Anbringungsabschnitt (46) der Blattfeder (38) und deren Fixierabschnitte (42) mechanisch mit dem Translator (24) gekoppelt sind.

2. Elektromagnetischer Aktuator nach Anspruch 1, **dadurch gekennzeichnet, dass** der Translator (24) unter Beibehaltung des orthogonal zur Bewegungsachse (36) gerichteten Luftspalt-Abstands zu dem Stator (12) zwischen einer Ruhestellung und einer von zwei Endstellungen vor- und zurückbewegbar ist, die sich bezogen auf die Ruhestellung in entgegengesetzten Richtungen ausgehend von dieser längs der Bewegungsachse (36) befinden.

3. Elektromagnetischer Aktuator nach Anspruch 1 oder 2, **dadurch gekennzeichnet, dass** der Anbringungsabschnitt (46) der mindestens einen Blattfeder (38) eine von dem Anbringungsabschnitt (46) abstehende Anbringungslasche (48) aufweist, mittels derer die Blattfeder (38) an dem Translator (24) angebracht ist, und dass jeder der Fixierabschnitte (42) der mindestens einen Blattfeder (38) mit einer abstehenden Fixierlasche (44) versehen ist, mittels derer die Blattfeder (38) an dem Stator (12) befestigt ist.

4. Elektromagnetischer Aktuator nach Anspruch 1 oder 2, **dadurch gekennzeichnet, dass** der Anbringungsabschnitt (46) der mindestens einen Blattfeder (38) eine von dem Anbringungsabschnitt (46) abstehende Anbringungslasche (48) aufweist, mittels derer die Blattfeder (38) an dem Stator (12) angebracht ist, und dass jeder der Fixierabschnitte (42) der mindestens einen Blattfeder (38) mit einer abstehenden Fixierlasche (44) versehen ist, mittels derer die Blattfeder (38) an dem Translator (24) befestigt ist.

5. Elektromagnetischer Aktuator nach einem der Ansprüche 1 bis 4, **dadurch gekennzeichnet, dass** die Führungsanordnung (40) zwei quer zur Bewegungsachse (36) des Translators (24) verlaufende Blattfedern (38) mit jeweils einem mittleren Anbringungsabschnitt (46) und zwei beidseitig des Anbringungsabschnitts (46) angeordneten Fixierabschnitten (42) aufweist und dass die beiden Blattfedern (38) in Verlaufsrichtung der Bewegungsachse (36) des Translators (24) betrachtet auf Abstand zueinander und insbesondere an einander abgewandten Enden entweder des Translators (24) oder des Stators (12) angeordnet sind.

6. Elektromagnetischer Aktuator nach einem der Ansprüche 1 bis 5, **dadurch gekennzeichnet, dass** der Stator (12) zwei plattenartige Statorelemente (14,16) aufweist und dass der Translator (24) als zwischen den Statorelementen (14,16) angeordnetes plattenartiges Translatorelement (26) ausgebildet ist.

7. Elektromagnetischer Aktuator nach einem der Ansprüche 1 bis 6, **dadurch gekennzeichnet, dass** entweder der Stator (12) mindestens einen Permanentmagneten (18,20) und/oder mindestens eine Statorspule sowie der Translator (24) mindestens eine mit dem Permanentmagneten (18,20) des Stators (12) und/oder mit der Statorspule zwecks Linearbewegung des Translators (24) zusammenwirkende Translatorspule (28) oder der Translator (24) mindestens einen Permanentmagneten und/oder mindestens eine Translatorspule (28) sowie der Stator (12) mindestens eine mit dem Permanentmagneten des Translators (24) und/oder mit der Translatorspule (28) zwecks Linearbewegung des Translators (24) zusammenwirkende Statorspule aufweist und dass eine Ansteuereinheit (34) zur Ansteuerung der mindestens einen Statorspule und/oder der mindestens einen Translatorspule (28) vorgesehen ist.

8. Bedienvorrichtung für eine Fahrzeugkomponente, mit
- einem Gehäuse (126),
- einem in und/oder an dem Gehäuse (126) angeordneten, manuell betätigbaren Bedienelement (112), das eine Bedienoberfläche (114) aufweist,
- wobei das Bedienelement (112) lateral bewegbar ist und/oder längs einer eine Lateralkomponente aufweisenden Bewegungsachse bewegbar ist, und
- einem elektromagnetischen Aktuator (10) nach einem der vorhergehenden Ansprüche, der zur taktilen Bestätigung einer manuellen Betätigung der Bedienoberfläche (114) des Bedienelements (112) aktivierbar ist,
- wobei der Stator (12) des Aktuators (10) mechanisch mit dem Gehäuse (126) sowie der Translator (24) des Aktuators (10) mechanisch mit dem Bedienelement (112) oder der Stator (12) des Aktuators (10) mechanisch mit dem Bedienelement (112) sowie der Translator (24) des Aktuators (10) mechanisch mit dem Gehäuse (126) gekoppelt ist.

## Claims

1. An electromagnetic actuator for a mechanical feedback unit of an operating device, particularly provided for a vehicle component, for a tactile feedback of an operation of the operating device, comprising
- a stator (12),
- a translator (24) which can be moved in translation along a movement axis (36) and which can be moved back and forth between a rest position and at least one end position, wherein the distance of the translator (24) to the stator (12), which is defined by an air gap directed orthogonally to the movement axis (36), is substantially maintained upon movement of the translator (24) along the movement axis (36), and
- a guidance arrangement (40) for guiding the translator (24) in translation while moving,
- wherein the guidance arrangement (40) comprises at least one leaf spring (38) which extends transversely to the movement axis (36) and to the alignment of the air gap distance of stator (12) and translator (24) and has a central attachment portion (46) and a fixing portion (42) on either side of the attachment portion (46), and
- wherein either the translator (24) is mechanically coupled with the attachment portion (46) of the leaf spring (38) and the fixing portions (42) thereof are mechanically coupled with the stator (12), or the stator (12) is mechanically coupled with the attachment portion (46) of the leaf spring (38) and the fixing portions (42) thereof are mechanically coupled with the translator (24).

2. The electromagnetic actuator according to claim 1, **characterized in that** the translator (24), whilst maintaining an air gap distance, directed orthogonally to the movement axis (36), to the stator (12), can be moved back and forth between a rest position and one of two end position, which, relative to the rest position, are arranged in opposite directions along the movement axis (36) starting from the rest position.

3. The electromagnetic actuator according to claim 1 or 2, **characterized in that** the attachment portion (46) of the at least one leaf spring (38) comprises an attachment lug (48) protruding from the attachment portion (46), wherein the leaf spring (38) is attached to the translator (24) by means of the attachment lug (48), and **in that** each fixing portion (42) of the at least one leaf spring (38) is provided with a protruding fixing lug (44), wherein the leaf spring (38) is mounted to the stator (12) by means of the fixing lug (44).

4. The electromagnetic actuator according to claim 1 or 2, **characterized in that** the attachment portion (46) of the at least one leaf spring (38) comprises an attachment lug (48) protruding from the attachment portion (46), wherein the leaf spring (38) is attached to the stator (12) by means of the attachment lug (48), and **in that** each fixing portion (42) of the at least one leaf spring (38) is provided with a protruding fixing lug (44), wherein the leaf spring (38) is mounted to the translator (24) by means of the fixing lug (44).

5. The electromagnetic actuator according to any one of claims 1 to 4, **characterized in that** the guidance arrangement (40) comprises two leaf springs (38) extending transversely to the movement axis (36) of the translator (24), each having a central attachment portion (46) and two fixing portions (42) arranged on either side of the attachment portion (46), and **in that** the two leaf springs (38), viewed in the direction of the movement axis (36) of the translator (24), are arranged at a distance from one another and, in particular, at opposite ends of either the translator (24) or the stator (12).

6. The electromagnetic actuator according to any one of claims 1 to 5, **characterized in that** the stator (12) comprises two plate-like stator elements (14,16), and **in that** the translator (24) is adapted as a plate-like translator element (26) arranged between the stator elements (14, 16).

7. The electromagnetic actuator according to any one of claims 1 to 6, **characterized in that** either the stator (12) comprises at least one permanent magnet (18,20) and/or at least one stator coil and the translator (24) comprises at least one translator coil (28) cooperating with the permanent magnet (18,20) of the stator (12) and/or the stator coil for the purpose of a linear movement of the translator (24), or the translator (24) comprises at least one permanent magnet and/or at least one translator coil (28) and the stator (12) comprises at least one stator coil cooperating with the permanent magnet of the translator (24) and/or the translator coil (28) for the purpose of a linear movement of the translator (24), and **in that** a control unit (34) for controlling the at least one stator coil and/or the at least one translator coil (28) is provided.

8. An operating device for a vehicle component, comprising
- a housing (126),
- a manually operable operating element (112) arranged in and/or at the housing (126) and having an operating surface (114),
- wherein the operating element (112) is laterally movable and/or movable along a movement axis comprising a lateral component, and
- an electromagnetic actuator (10) according to any one of the preceding claims, which can be activated for the tactile confirmation of a manual operation of the operating surface (114) of the operating element (112),
- wherein the stator (12) of the actuator (10) is mechanically coupled with the housing (126) and the translator (24) of the actuator (10) is mechanically coupled with the operating element (112), or the stator (12) of the actuator (10) is mechanically coupled with the operating element (112) and the translator (24) of the actuator (10) is mechanically coupled with the housing (126).

## Revendications

1. Actionneur électromagnétique pour une unité de rétroaction mécanique d'un dispositif de commande prévu en particulier pour un composant de véhicule destiné à la rétroaction tactile d'une commande du dispositif de commande, doté
- d'un stator (12),
- d'un translateur (24) déplaçable en translation le long d'un axe de déplacement (36), pouvant avancer et reculer entre une position de repos et au moins une position finale, dans lequel la distance du translateur (24) au stator (12), laquelle est définie par un interstice d'air dirigé orthogonalement à l'axe de déplacement (36), reste sensiblement identique lors du déplacement du translateur (24) le long de l'axe de déplacement (36), et
- d'un arrangement de guidage (40) destiné au guidage translatoire du translateur (24) lors du déplacement de celui-ci,
- dans lequel l'arrangement de guidage (40) comporte au moins un ressort à lame (38) s'étendant transversalement aussi bien par rapport à l'axe de déplacement (36) que par rapport à l'orientation de la distance d'interstice d'air entre le stator (12) et le translateur (24), le ressort à lame comportant une section de montage médiane (46) et une section de fixation (42) respectivement des deux côtés de la section de montage (46), et
- dans lequel ou bien le translateur (24) est couplé mécaniquement avec la section de montage (46) du ressort à lame (38) et les sections de fixation (42) de celui-ci sont couplées mécaniquement avec le stator (12) ou bien le stator (12) est couplé mécaniquement avec la section de montage (46) du ressort à lame (38) et les sections de fixation (42) de celui-ci sont couplées mécaniquement avec le translateur (24).

2. Actionneur électromagnétique selon la revendication 1, **caractérisé en ce que** le translateur (24), tout en maintenant la distance d'interstice d'air dirigée orthogonalement à l'axe de déplacement (36) entre celui-ci et le stator (12), peut avancer et reculer entre une position de repos et une de deux positions finales, lesquelles se trouvent, par rapport à la position de repos, dans des directions opposées à partir de celle-ci le long de l'axe de déplacement (36).

3. Actionneur électromagnétique selon la revendication 1 ou 2, **caractérisé en ce que** la section de montage (46) de l'au moins un ressort à lame (38) comporte une patte de montage (48) saillant de la section de montage (46), au moyen de laquelle le ressort à lame (38) est monté sur le translateur (24), et **en ce que** chacune des sections de fixation (42) de l'au moins un ressort à lame (38) est pourvue d'une patte de fixation (44) saillante, au moyen de laquelle le ressort à lame (38) est fixé sur le stator (12).

4. Actionneur électromagnétique selon la revendication 1 ou 2, **caractérisé en ce que** la section de montage (46) de l'au moins un ressort à lame (38) comporte une patte de montage (48) dépassant de la section de montage (46), au moyen de laquelle le ressort à lame (38) est monté sur le stator (12), et **en ce que** chacune des sections de fixation (42) de l'au moins un ressort à lame (38) est pourvue d'une patte de fixation (44) saillante, au moyen de laquelle le ressort à lame (38) est fixé sur le translateur (24).

5. Actionneur électromagnétique selon l'une des revendications 1 à 4, **caractérisée en ce que** l'arrangement de guidage (40) comporte deux ressorts à lame (38) transversaux par rapport à l'axe de déplacement (36) du translateur (24), dotés respectivement d'une section de montage médiane (46) et de deux sections de fixation (42) disposées des deux côtés de la section de montage (46) et **en ce que** les deux ressorts à lame (38) sont disposés, en vue dans la direction d'extension de l'axe de déplacement (36) du translateur (24), à distance l'un de l'autre et en particulier à des extrémités se détournant l'une de l'autre ou bien du translateur (24) ou bien du stator (12).

6. Actionneur électromagnétique selon l'une des revendications 1 à 5, **caractérisée en ce que** le stator (12) comporte deux éléments de stator (14, 16) de type plaque et **en ce que** le translateur (24) est réalisé comme élément de translateur (26) de type plaque disposé entre les éléments de stator (14, 16).

7. Actionneur électromagnétique selon l'une des revendications 1 à 6, **caractérisée en ce que** ou bien le stator (12) comporte au moins un aimant permanent (18, 20) et/ou au moins une bobine de stator et le translateur (24) comporte au moins une bobine de translateur (28) coopérant avec l'aimant permanent (18, 20) du stator (12) et/ou avec la bobine de stator en vue du déplacement linéaire du translateur (24) ou bien le translateur (24) comporte au moins un aimant permanent et/ou au moins une bobine de translateur (28) et le stator (12) comporte au moins une bobine de stator coopérant avec l'aimant permanent du translateur (24) et/ou avec la bobine de translateur (28) en vue du déplacement linéaire du translateur (24) et **en ce qu'**une unité de déclenchement (34) est prévue pour le déclenchement de l'au moins une bobine de stator et/ou de l'au moins une bobine de translateur (28).

8. Dispositif de commande pour un composant de véhicule, doté
- d'un boîtier (126),
- d'un élément de commande (112) actionnable manuellement disposé dans et/ou sur le boîtier (126), comportant une surface de commande (114),
- dans lequel l'élément de commande (112) est déplaçable latéralement et/ou est déplaçable le long d'un axe de déplacement comportant une composante latérale, et
- d'un actionneur électromagnétique (10) selon l'une des revendications précédentes, lequel est activable pour confirmation tactile d'un actionnement manuel de la surface de commande (114) de l'élément de commande (112),
- dans lequel le stator (12) de l'actionneur (10) est couplé mécaniquement avec le boîtier (126) et le translateur (24) de l'actionneur (10) est couplé mécaniquement avec l'élément de commande (112) ou le stator (12) de l'actionneur (10) est couplé mécaniquement avec l'élément de commande (112) et le translateur (24) de l'actionneur (10) est couplé mécaniquement avec le boîtier (126).
